**Europäisches Patentamt**

**European Patent Office**

**Office européen des brevets**

(19)

(11) Veröffentlichungsnummer : **0 384 203 B1**

(12)     **EUROPÄISCHE PATENTSCHRIFT**

(45) Veröffentlichungstag der Patentschrift :
**03.02.93 Patentblatt 93/05**

(51) Int. Cl.⁵ : **C01B 25/00, C08K 3/02, C08K 9/04**

(21) Anmeldenummer : **90102258.2**

(22) Anmeldetag : **06.02.90**

(54) **Phlegmatisierter roter Phosphor.**

(30) Priorität : **18.02.89 DE 3905039**

(43) Veröffentlichungstag der Anmeldung :
**29.08.90 Patentblatt 90/35**

(45) Bekanntmachung des Hinweises auf die
Patenterteilung :
**03.02.93 Patentblatt 93/05**

(84) Benannte Vertragsstaaten :
**DE GB IT**

(56) Entgegenhaltungen :
**EP-A- 0 176 836**
**GB-A- 2 074 995**

(73) Patentinhaber : **HOECHST
AKTIENGESELLSCHAFT
Brüningstrasse 50
W-6230 Frankfurt/Main 80 (DE)**

(72) Erfinder : **Staendeke, Horst, Dr.
Alte Honrather Strasse 22
W-5204 Lohmar (DE)**
Erfinder : **Thümmler, Ursus, Dr.
Am Kapellenbusch 27
W-5042 Erfstadt (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft phlegmatisierten, pulverförmigen, gut rieselfähigen roten Phosphor sowie ein Verfahren zu seiner Herstellung.

Roter Phosphor wird bekanntlich in der Pyrotechnik sowie zur Herstellung von Zündholzreibflächen benötigt und findet darüber hinaus Anwendung als Flammschutzmittel für Kunststoffe wie z.B. Polyamide oder Polyurethane. In jedem der vorgenannten Anwendungsgebiete ist die Verarbeitung des pulverförmigen roten Phosphors auf Grund seiner leichten Entzündbarkeit erschwert. Insbesondere die bei der Verarbeitung des roten Phosphors bisher unvermeidliche Staubbildung birgt große Gefahren in sich, da bereits elektrostatische Entladungsfunken Staubexplosionen mit hoher Fortpflanzungsgeschwindigkeit auslösen können. Diese Gefahr ist um so größer, je feiner die Körnung des roten Phosphors ist. Feinpulverisierter roter Phosphor wird aber beispielsweise bei der flammwidrigen Ausrüstung von Kunststoffen benötigt. Es bestand somit die Aufgabe, vorgenannte Gefahr durch Phlegmatisieren des roten Phosphors zu beseitigen.

Es ist gemäß der DE-B-11 85 591 bekannt, pulverförmigen roten Phosphor gegen die Einwirkung von Luft und Feuchtigkeit dadurch zu schützen, daß man ihn mit in feinverteilter Form vorliegendem Paraffin und/oder Wachs innig vermischt, anschließend die Mischung nur wenig über den Schmelzpunkt des Paraffins und/oder Wachses erhitzt und dann wieder abkühlt.

Weiterhin wird in der DE-A-22 49 638 (= US-A-3 974 260 die Phlegmatisierung des roten Phosphors mit Hilfe von bei Raumtemperatur und Atmosphärendruck flüssigen, reaktionsträgen und einen geringen Dampfdruck aufweisenden organischen oder silicoorganischen Verbindungen beschrieben. Der bevorzugte Konzentrationsbereich liegt bei 4-10 Masse% an Phlegmatisierungsmittel. Dieser hohe Anteil an Phlegmatisierungsmittel schränkt die Verwendbarkeit des roten Phosphors deutlich ein. Darüber hinaus ist das vorbekannte Verfahren der Aufbringung des Phlegmatisierungsmittels durch inniges Vermischen der Komponenten mit erheblichen technischen Nachteilen behaftet.

Schließlich beschreibt die DE 34 36 161 A1 einen phlegmatisierten, pulverförmigen roten Phosphor, welcher hergestellt wird, indem man in eine wässerige Suspension von rotem Phosphor eine wässerige Emulsion der als Phlegmatisierungsmittel dienenden organischen Verbindung einträgt, worauf man das Gemisch nach Einstellen eines pH-Wertes von 5 bis 9 während 0,5 bis 3 Stunden bei einer Temperatur von 20 bis 90°C rührt und schließlich den phlegmatisierten roten Phosphor nach der Filtration bei erhöhter Temperatur trocknet.

Bei der Einarbeitung eines derart phlegmatisierten roten Phosphors in Thermoplaste zeigte sich jedoch, daß trotz hoher Feinteiligkeit des eingesetzten roten Phosphors dieser im Thermoplast nicht homogen verteilt war. Die bei der Phlegmatisierung entstandenen "Agglomerate" ließen sich auch bei der Extruderverarbeitung nicht zerteilen und waren als "Nester" deutlich erkennbar, was vermutlich auf die Unlöslichkeit des Phlegmatisierungsmittels im Thermoplasten zurückzuführen ist.

Die aufgezeigten Nachteile werden bei dem erfindungsgemäßen Mittel und der erfindungsgemäßen Verfahrensweise in überraschender Weise überwunden. Gegenstand der Erfindung ist nunmehr phlegmatisierter, pulverförmiger, gut rieselfähiger, roter Phosphor, welcher dadurch gekennzeichnet ist, daß er aus 95 bis 99,95 Masse% rotem Phosphor einer Teilchengröße bis zu 2 mm und 0,05 bis 5 Masse% Polyurethan als Phlegmatisierungsmittel besteht.

Der Polyurethan-Anteil als Phlegmatisierungsmittel kann vorzugsweise 0,5 bis 1,5 Masse% betragen. Der rote Phosphor besitzt vorzugsweise eine Teilchengröße von 0,0001 mm bis 0,5 mm. Das Phlegmatisierungsmittel ist beispielsweise ein Polyester-Polyurethan.

Die Erfindung betrifft aber auch ein vorteilhaftes Verfahren zur Herstellung von phlegmatisiertem, pulverförmigem, gut rieselfähigem, rotem Phosphor, welches dadurch gekennzeichnet ist, daß man in eine wässerige Suspension des roten Phosphors mit einer Teilchengröße bis zu 2 mm nach Einstellen eines pH-Wertes von 5 bis 9 eine wässerige Polyurethan-Dispersion einträgt, derart, daß auf 95 bis 99,95 Masse-Teile roten Phosphor 5 bis 0,05 Masse-Teile Polyurethan fallen, worauf man das Gemisch während 0,5 bis 3 Stunden bei einer Temperatur von 20 bis 90°C rührt und schließlich den phlegmatisierten roten Phosphor nach der Filtration bei erhöhter Temperatur trocknet.

Das Verfahren der Erfindung kann weiterhin bevorzugt und wahlweise dadurch gekennzeichnet sein, daß

a) die wässerige Suspension bis zu 75 Masse% roten Phosphor enthält;

b) die wässerige Polyurethan-Dispersion etwa 40 Masse% des als Phlegmatisierungsmittel dienenden Polyurethans enthält;

c) der eingesetzte rote Phosphor eine Teilchengröße von 0,0001 mm bis 0,5 mm besitzt;

d) man das Gemisch nach Einstellen eines pH-Wertes von 6-8 und Zugabe der wässerigen Polyurethan-Dispersion während 1 Stunde bei einer Temperatur von etwa 60°C rührt;

e) das Phlegmatisierungsmittel ein Polyester-Polyurethan ist;

f) nach der Filtration bei Temperaturen von 80 bis 120°C im Stickstoffstrom getrocknet wird.

Die erfindungsgemäße Phlegmatisierung in wäßriger Phase führt in überraschender Weise dazu, daß die angestrebten Effekte mit sehr geringen Gehalten an Phlegmatisierungsmittel erreicht werden.

Die nachfolgenden Beispiele und Tabellen dienen zur näheren Erläuterung der Erfindung.

Beispiel 1 (erfindungsgemäß)

500 ml einer wässerig-alkalischen Phosphorsuspension mit einem Gehalt von 250 g rotem Phosphor (Teilchengröße 0,001 bis 0,4 mm) wurden auf 60°C erwärmt und durch Zugabe von 5 %iger Schwefelsäure auf einen pH-Wert von 8 eingestellt.

Dann wurden 1,9 g ® Astacin Finish PUD (BASF AG, Ludwigshafen, 40 proz. , wäßrige, anionische Polyester-Polyurethan-Dispersion, die gemäß DE 26 45 779 C3 hergestellt wurde) eingerührt. Die Suspension wurde anschließend eine Stunde bei 60°C gerührt und dann filtriert. Der Filterrückstand wurde mit Wasser gewaschen und anschließend bei 100°C im Stickstoffstrom getrocknet. Der Polyurethangehalt lag bei 0,31 Masse%.

Die Werte für die anwendungsbezogenen Ausprüfungen des auf diese Weise phlegmatisierten roten Phosphors sind in den Tabellen 1 und 2 dargestellt.

Beispiel 2 (erfindungsgemäß)

Es wurde analog Beispiel 1 verfahren, wobei jedoch 3,8 g ®Astacin Finish PUD eingesetzt wurden.

Der Polyurethangehalt lag bei 0,57 Masse%.

Die Werte für die anwendungsbezogenen Ausprüfungen des auf diese Weise phlegmatisierten roten Phosphors sind in den Tabellen 1 und 2 dargestellt.

Beispiel 3 (erfindungsgemäß)

Es wurde analog Beispiel 1 verfahren, wobei jedoch 6,5 g ®Astacin Finish PUD eingesetzt wurden.

Der Polyurethangehalt lag bei 1,04 Masse%.

Die Werte für die anwendungsbezogenen Ausprüfungen des auf diese Weise phlegmatisierten roten Phosphors sind in den Tabellen 1 und 2 dargestellt.

Beispiel 4 (erfindungsgemäß)

Es wurde analog Beisiel 1 verfahren, wobei jedoch 10,0 g ®Astacin Finish PUD eingesetzt wurden.

Der Polyurethangehalt lag bei 1,43 Masse%.

Die Werte für die anwendungsbezogenen Ausprüfungen des auf diese Weise phlegmatisierten roten Phosphors sind in den Tabellen 1 und 2 dargestellt.

Beispiel 5 (Vergleich)

Es wurde analog Beispiel 1 verfahren, wobei jedoch auf die Zugabe von ® Astacin Finish PUD verzichtet wurde.

Die Werte für die anwendungsbezogenen Ausprüfungen dieses nicht phlegmatisierten roten Phosphors sind in den Tabellen 1 und 2 dargestellt.

Beispiel 6 (Vergleich)

Es wurde analog Beispiel 1 der DE 34 36 161 A1 gearbeitet. Der analytisch ermittelte Gehalt an Phlegmatisierungsmittel (Di-2-ethylhexylphthalat) lag bei 0,42 Masse%.

Die Werte für die anwendungsbezogenen Ausprüfungen des auf diese Weise phlegmatisierten roten Phosphors sind in den Tabellen 1 und 2 dargestellt.

Bestimmung der Rieselfähigkeit

Die Bestimmung der Rieselfähigkeit erfolgte mit dem in der DIN 53 916 angegebenen Testgerät nach PFRENGLE (DIN 53 916, Ausgabe August 1974: Bestimmung der Rieselfähigkeit von Pulvern und Granulaten). Siehe auch: Tenside 12, 167 (1975)

Bestimmung der Staubbildung

Ein Relativvergleich der Staubbildung wurde mit Hilfe des Konimeters, Typ H-S, der Fa. Sartorius, Göttingen durchgeführt. Dieses Gerät ist von K. Guthmann, Stahl und Eisen 79, 1129 ff. (1959), beschrieben worden.

Zur Vorbereitung der Messung wurden 0,5 g Probematerial in ein trockenes 50 ml Wägegläschen mit Schliffdeckel eingewogen und 2 Minuten intensiv geschüttelt. Nach Entfernung des Deckels erfolgte die Messung des Phosphorstaubes in den in der Tabelle 2 angegebenen Zeitintervallen.

Die in der Tabelle 1 angegebenen Werte für die Rieselfähigkeit zeigen deutlich, daß das Rieselverhalten des erfindungsgemäß phlegmatisierten roten Phosphors besser ist als das des nach dem Stand der Technik phlegmatisierten roten Phosphors und auch des unphlegmatisierten roten Phosphors.

Gleichzeitig wird die Staubbildung, wie die Tabelle 2 zeigt, sehr wirkungsvoll reduziert. Bei vergleichbaren Gehalten an Phlegmatisierungsmittel ergibt das erfindungsgemäße Verfahren deutliche Vorteile gegenüber dem Stand der Technik.

TABELLE 1: Abhängigkeit der Rieselfähigkeit vom Gehalt an Phlegmatisierungsmittel und von der Kornverteilung

| Produkt | Gehalt an Phleg-matisierungsmittel (%) | Körnungsanalyse (%) [a] | | | Rieselfähigkeit (DIN 53 916) | |
|---|---|---|---|---|---|---|
| | | 4oo-1oo µm | 1oo-45 µm | < 45 µm | Höhe des Schüttkegels (mm) | Cotangens des Schüttwinkels |
| Beispiel 1 (erfindungsgemäß) | 0,31 | 1 | 9 | 9o | 4,7 [b] | 1,o6 |
| Beispiel 2 (erfindungsgemäß) | 0,57 | 1 | 1o | 89 | 4,5 [b] | 1,11 |
| Beispiel 3 (erfindungsgemäß) | 1,o4 | 2 | 1o | 88 | 4,3 [b] | 1,16 |
| Beispiel 4 (erfindungsgemäß) | 1,43 | 4 | 14 | 82 | 4,1 [b] | 1,22 |
| Beispiel 5 (Vergleich) | - | 1 | 8 | 91 | 5,o [b] | 1,oo |
| Beispiel 6 (Vergleich) | 0,42 | 2 | 1o | 88 | 5,5 [b] | 0,91 |

a) Die Werte der Körnungsanalyse wurden durch Naßsiebung mit Wasser/Methanol erhalten.

b) Mittelwerte aus 5 Einzelmessungen

EP 0 384 203 B1

TABELLE 2: Abhängigkeit der Staubbildung vom Gehalt an Phlegmatisierungsmittel und von der Kornverteilung

| Produkt | Gehalt an Phlegma-tisierungsmittel (%) | Körnungsanalyse (%) [a] | | | Staubteilchen/cm$^3$ Luft [b] nach einer Absitzzeit von .. Minuten [c] | | | | | | | | |
|---|---|---|---|---|---|---|---|---|---|---|---|---|---|
| | | 4oo-1oo µm | 1oo-45 µm | <45 µm | 0 | 0,5 | 1,0 | 1,5 | 2,0 | 2,5 | 3,0 | 4,0 | 5,0 |
| Beispiel 1 (erfindungsgemäß) | 0,31 | 1 | 9 | 9o | >5oo | 28o | 8o | 8 | – | – | – | – | – |
| Beispiel 2 (erfindungsgemäß) | 0,57 | 1 | 1o | 89 | >5oo | 6o | 5 | – | – | – | – | – | – |
| Beispiel 3 (erfindungsgemäß) | 1,o4 | 2 | 1o | 88 | 2oo | 7 | 1 | – | – | – | – | – | – |
| Beispiel 4 (erfindungsgemäß) | 1,43 | 4 | 14 | 82 | 4o | – | – | – | – | – | – | – | – |
| Beispiel 5 (Vergleich) | – | 1 | 8 | 91 | >5oo | >5oo | >5oo | >5oo | >5oo | >5oo | >5oo | 3oo | 8o |
| Beispiel 6 (Vergleich) | 0,42 | 2 | 1o | 88 | >5oo | >5oo | 32o | 14o | 2o | – | – | – | – |

a) Die Werte der Körnungsanalyse wurden durch Naßsiebung mit Wasser/Methanol ermittelt

b) Die Messung erfolgte mit einem Konimeter, Typ H-S der Fa. Sartorius, Göttingen

c) Die angegebenen Werte sind Mittelwerte aus 5 Einzelmessungen

**Patentansprüche**

1. Phlegmatisierter, pulverförmiger, gut rieselfähiger roter Phosphor, <u>dadurch gekennzeichnet</u>, daß er aus 95 bis 99,95 Masse% rotem Phosphor einer Teilchengröße bis zu 2 mm und 0,05 bis 5 Masse% Polyurethan als Phlegmatisierungsmittel besteht.

2. Phlegmatisierter roter Phosphor nach Anspruch 1, <u>dadurch gekennzeichnet</u>, daß der Polyurethan-Anteil als Phlegmatisierungsmittel 0,5 bis 1,5 Masse% beträgt.

3. Phlegmatisierter roter Phosphor nach Anspruch 1 oder 2, <u>dadurch gekennzeichnet</u>, daß der rote Phosphor eine Teilchengröße von 0,0001 mm bis 0,5 mm besitzt.

4. Phlegmatisierter roter Phosphor nach mindestens einem der Ansprüche 1-4, <u>dadurch gekennzeichnet</u>, daß das Phlegmatisierungsmittel ein Polyester-Polyurethan ist.

5. Verfahren zur Herstellung von phlegmatisiertem, gut rieselfähigem, pulverförmigem, rotem Phosphor nach mindestens einem der Ansprüche 1-4, <u>dadurch gekennzeichnet</u>, daß man in eine wässerige Suspension des roten Phosphors mit einer Teilchengröße bis zu 2 mm nach Einstellen eines pH-Wertes von 5 bis 9 eine wässerige Polyurethan-Dispersion einträgt, derart, daß auf 95 bis 99,95 Masse-Teile roten Phosphor 5 bis 0,05 Masse-Teile Polyurethan fallen, worauf man das Gemisch während 0,5 bis 3 Stunden bei einer Temperatur von 2o bis 90°C rührt und schließlich den phlegmatisierten roten Phosphor nach der Filtration bei erhöhter Temperatur trocknet.

6. Verfahren nach Anspruch 5, <u>dadurch gekennzeichnet</u>, daß die wässerige Suspension bis zu 75 Masse% roten Phosphor enthält.

7. Verfahren nach Anspruch 5 oder 6, <u>dadurch gekennzeichnet</u>, daß die wässerige Polyurethan-Dispersion etwa 40 Masse% des als Phlegmatisierungsmittel dienenden Polyurethans enthält.

8. Verfahren nach mindestens einem der Ansprüche 5-7, <u>dadurch gekennzeichnet</u>, daß der eingesetzte rote Phosphor eine Teilchengröße von 0,0001 mm - 0,5 mm besitzt.

9. Verfahren nach mindestens einem der Ansprüche 5-8, <u>dadurch gekennzeichnet</u>, daß man das Gemisch nach Einstellen eines pH-Wertes von 6-8 und Zugabe der wässerigen Polyurethan-Dispersion während 1 Stunde bei einer Temperatur von etwa 60°C rührt.

10. Verfahren nach mindestens einem der Ansprüche 5-9, <u>dadurch gekennzeichnet</u>, daß das Phlegmatisierungsmittel ein Polyester-Polyurethan ist.

11. Verfahren nach mindestem einem der Ansprüche 5-10, <u>dadurch gekennzeichnet</u>, daß nach der Filtration bei Temperaturen von 80-120°C im Stickstoffstrom getrocknet wird.

**Claims**

1. Phlegmatized, pulverulent red phosphorus with good free-flowing properties, which comprises 95 to 99.95% by weight of red phosphorus having a particle size of up to 2 mm, and 0.05 to 5% by weight of polyurethane as phlegmatization agent.

2. Phlegmatized red phosphorus as claimed in claim 1, wherein the polyurethane content as phlegmatization agent is 0.5 to 1.5% by weight.

3. Phlegmatized red phosphorus as claimed in claim 1 or 2, wherein the red phosphorus has a particle size of from 0.0001 mm to 0.5 mm.

4. Phlegmatized red phosphorus as claimed in at least one of claims 1 to 4, wherein the phlegmatization agent is a polyester polyurethane.

5. A process for the preparation of phlegmatized, pulverulent red phosphorus with good free-flowing properties as claimed in at least one of claims 1 to 4, which comprises introducing an aqueous polyurethane dispersion into an aqueous suspension of red phosphorus having a particle size of up to 2 mm, after a pH of from 5 to 9 has been set, in a manner such that 5 to 0.05 parts by weight of polyurethane are present per 95 to 99.95 parts by weight of red phosphorus, then stirring the mixture at a temperature of from 20 to 90°C for 0.5 to 3 hours, and finally drying the phlegmatized red phosphorus at elevated temperature after filtration.

6. A process as claimed in claim 5, wherein the aqueous suspension contains up to 75% by weight of red phosphorus.

7. A process as claimed in claim 5 or 6, wherein the aqueous polyurethane dispersion contains about 40% by weight of the polyurethane serving as phlegmatization agent.

8. A process as claimed in at least one of claims 5 to 7, wherein the red phosphorus employed has a particle size of from 0.0001 mm - 0.5 mm.

9. A process as claimed in at least one of claims 5 to 8, wherein the mixture is stirred at a temperature of about 60°C for 1 hour after a pH of 6-8 has been set and after the aqueous polyurethane dispersion has been added.

10. A process as claimed in at least one of claims 5 to 9, wherein the phlegmatization agent is a polyester polyurethane.

11. A process as claimed in at least one of claims 5 to 10, wherein the mixture is dried at temperatures of 80-120°C in a stream of nitrogen after filtration.


**Revendications**

1. Phosphore rouge flegmatisé, pulvérulent, très coulant, caractérisé en ce qu'il se compose de 95 à 99,95% en masse de phosphore rouge ayant une granulométrie maximale de 2 mm et de 0,05 à 5% en masse de polyuréthanne comme agent flegmatisant.

2. Phosphore rouge flegmatisé selon la revendication 1, caractérisé en ce que la proportion de polyuréthanne comme agent flegmatisant est de 0,5 à 1,5% en masse.

3. Phosphore rouge flegmatisé selon la revendication 1 ou 2, caractérisé en ce que le phosphore rouge possède une granulométrie de 0,0001 mm à 0,5 mm.

4. Phosphore rouge flegmatisé selon au moins une des revendications 1 à 3, caractérisé en ce que l'agent flegmatisant est un polyester-polyuréthanne.

5. Procédé de fabrication de phosphore rouge flegmatisé, très coulant, pulvérulent, selon au moins une des revendications 1 à 4, caractérisé en ce qu'on introduit une dispersion aqueuse de polyuréthanne dans une suspension aqueuse de phosphore rouge ayant une granulométrie maximale de 2 mm, après ajustement du pH entre 5 et 9 de façon à avoir 5 à 0,05 parties en masse de polyuréthanne pour 95 à 99,95 parties en masse de phosphore rouge, après quoi on agite le mélange pendant 0,5 à 3 h à une température de 20 à 90°C et on sèche finalement le phosphore rouge flegmatisé à une température élevée après filtration.

6. Procédé selon la revendication 5, caractérisé en ce que la suspension aqueuse contient jusqu'à 75% en masse de phosphore rouge.

7. Procédé selon la revendication 5 ou 6, caractérisé en ce que la dispersion aqueuse de polyuréthanne contient environ 40% en masse du polyuréthanne servant d'agent flegmatisant.

8. Procédé selon au moins une des revendications 5 à 7, caractérisé en ce que le phosphore rouge utilisé possède une granulométrie de 0,0001 mm à 0,5 mm.

9. Procédé selon au moins une des revendications 5 à 8, caractérisé en ce qu'on agite le mélange, après ajustement du pH entre 6 et 8 et addition de la dispersion aqueuse de polyuréthanne, pendant 1 h à une température d'environ 60°C.

10. Procédé selon au moins une des revendications 5 à 9, caractérisé en ce que l'agent flegmatisant est un polyester-polyuréthanne.

11. Procédé selon au moins une des revendications 5 à 10, caractérisé en ce qu'on sèche après la filtration dans un courant d'azote à des températures comprises entre 80 et 120°C.